# EUROPÄISCHE PATENTSCHRIFT

(11) **EP 3 584 018 B1**
(45) Veröffentlichungstag und Bekanntmachung des Hinweises auf die Patenterteilung: **23.12.2020**
(21) Anmeldenummer: 19000238.6
(22) Anmeldetag: 15.05.2019
(51) Int. Cl.: B21D 7/022, B21D 11/10, B21D 26/049, B23P 9/00, G01L 7/04

(54) **VERFAHREN ZUR HERSTELLUNG EINER BOURDON - FEDER**
METHOD FOR PRODUCING A BOURDON TUBE
PROCÉDÉ DE FABRICATION D'UN TUBE DE BOURDON

(30) Priorität: 17.05.2018 DE 102018003963; 17.05.2018 DE 102018003964
(43) Veröffentlichungstag der Anmeldung: 25.12.2019
(73) Patentinhaber: Heller, Heinz, 74731 Rippberg (DE)
(72) Erfinder: Heller, Heinz, 74731 Rippberg (DE)

(56) Entgegenhaltungen:
- DE-A1- 4 127 554
- DE-A1- 10 248 251

## Beschreibung

Die Erfindung betrifft ein Verfahren zur Herstellung einer Bourdon-Feder mit oder ohne einen Prozessträger.

Bourdon-Federn, auch als Rohrfedern bezeichnet, werden als Messglied zur Messung von Druckunterschieden eingesetzt. Die meisten mechanischen Druckmessgeräte verwenden eine Bourdon-Feder. Ferner erfolgt die Verwendung in Druckschaltern sowie zur Temperaturmessung in Gasdruckthermometern und Thermostaten. Eine Rohrfeder besteht in der Regel aus einem geplätteten, kreis-, schnecken- oder schraubförmig aufgewickelten Metallrohr und wird nach seinem Erfinder Bourdon-Feder genannt.

Das Wirkprinzip einer Bourdon-Feder besteht darin, dass bei Druckbeaufschlagung die Feder dazu strebt, sich aufzubiegen. Die Wegänderung des Federendes wird über eine Zugstange auf ein Messwerk übertragen und in eine Drehung der Zeigerachse umgesetzt.

Bei den Rohrfedern werden zwischen Zug- und Druckfedern, Torsionsfedern sowie Biegefedern unterschieden. Unter die Zug- und Druckfedern fällt unter anderem die Wellrohrfeder. Hierbei wird die Längenausdehnung eines dünnwandigen, auf einer Seite verschlossenen und auf der anderen Seite mit Druck beaufschlagten Wellrohres auf ein Messwerk übertragen. Torsions- oder Drallrohrfedern sind gerade, zu ovalen oder sternförmigen Querschnitt gepresste und in sich tordierte Rohre, die sich unter Druckeinwirkung abwickeln. Auch in diesem Fall wird die Drehbewegung auf eine Zeigerachse übertragen. Während diese beiden Federarten eine technisch untergeordnete Rolle spielen, werden die gekrümmten Biegefedern (Bourdon-Federn) in hohen Stückzahlen produziert und in Manometern, Gasdruckthermometern und Schaltgeräten eingesetzt. Hierbei erfolgt eine Unterteilung der Bourdon-Federn nach ihrer Wicklungsart in Kreisfedern für einen Druckbereich von 0,6 bis 60 Bar, in Schneckenfedern für einen Druckbereich von 60 bis 1000 Bar und Schraubenfedern für einen Druckbereich bis 4000 Bar. Die Anpassung an die verschiedenen Messbereiche erfolgt durch Variationen der Rohrwandstärke, der Rohrquerschnittsgeometrie und des Rohrfeder-Werkstoffes.

Die Rohrfedern werden meist aus metallischen Werkstoffen gefertigt. Aufgrund der Tatsache, dass das Messmedium in die Rohrfeder eindringt, muss das verwendete Material beständig gegenüber dem Messmedium sein oder ein flüssigkeitsgefüllter Druckmittler kommt zum Einsatz. Meist werden für die Rohrfedern Messing, Kupfer- oder Kupfernickel-Legierung sowie Edelstahl oder unlegierter Stahl verwendet. Von besonderer Bedeutung ist das sämtliche Rohrfedern so ausgelegt sein müssen, dass diese im normalen Betrieb nicht in den Bereich der plastischen Verformung gelangen und somit ein Manometer überlastet wird, weil sich der Zeiger bei der Druckentlastung nicht mehr bis zum Skalennullpunkt bewegen kann.

Die Herstellung der Bourdon-Federn erfolgt in einzelnen Schritten. Zunächst werden die runden Ausgangsrohre gewalzt, einseitig verschlossen und mit Sand oder Salz gefüllt. Danach wird das zweite Ende verschlossen und das Ausgangsrohr über einen Dorn gebogen. Anschließend werden die zugedrückten Endstücke geöffnet, um das Füllmaterial zu entleeren und die gebogene Feder zu reinigen. Danach wird das Rohr auf ein Maß von 270 Grad zugeschnitten. Die fertig gestellten Rohrfedern werden anschließend mit einem Prozessträger verschweißt, wobei vorzugsweise das WIG-Schweißen angewendet wird. Hierbei ist zu berücksichtigen, dass es sich um sehr dünne Rohre mit einer Wandstärke von 0,07 bis 0,9 mm handelt.

Um die Anschweißung durchzuführen besteht die Notwendigkeit, dass der Federträger eine spezielle Schweißnahtvorbereitung erfährt. Als nachteilig hat sich herausgestellt, dass die Innenseite der Feder eine starke Spaltkorrosion aufweisen kann sowie außen sehr hohen Anlauftemperaturen ausgesetzt ist, welche sich auf die Hysterese negativ auswirken. Beim WIG-Schweißen von Hand glühen die Federn beispielsweise aus, wodurch eine Verschlechterung der Messergebnisse eintritt. Zudem ist die Maßhaltigkeit nach dem WIG Schweißen außerhalb der Toleranz von +- 0,1 mm, wodurch nach Fertigstellung der Bourdon-Feder die Kinematik für die anschließende Justage nicht gewährleistet ist. Von Nachteil ist des Weiteren, dass bei der Temperaturbehandlung nur die Federn erwärmt werden und nicht das komplette System, bestehend aus der Feder und dem Prozessträger. Nach erfolgter Anschweißung ist ein hoher Prüfaufwand hinsichtlich der Dichtigkeit erforderlich, weil beispielsweise ein Ausschuss von bis zu 30% bei den Federn mit einer Wandstärke von 0,07 mm entsteht. Dadurch, dass die Federn für einen speziellen Messbereich hergestellt werden, ist es ferner erforderlich, dass die Bourdon-Federn gekennzeichnet werden.

Die Druckschriften DE 41 27 554 A1, DE 102 48 251 A1 und DE 10 2010 037 633 A1 offenbaren bekannte Verfahren zur Herstellung einer Bourdon-Feder.

Der vorliegenden Patentanmeldung liegt die Aufgabenstellung zugrunde, ein neues Verfahren zur Herstellung einer Bourdon-Feder mit oder ohne Prozessträger aufzuzeigen, welches die beschriebenen Nachteile vermeidet und eine Bourdon-Feder zur Verfügung stellt, die anschließend in Druckmessgeräte verbaut werden kann.

Das erfindungsgemäße Verfahren zeichnet sich dadurch aus, dass folgende Arbeitsschritte zumindest verwendet werden:
- Verwendung eines geraden Profilrohres mit einem annähernd rechteckförmigen Querschnitt,
- Verschließen eines Endes des Profilrohres durch ein angeschweißtes Endstück,
- Anschweißen des zweiten Endes des Profilrohres an einen Prozessträger oder Aufnahme des zweiten Endes des Profilrohrs in einem Werkzeughalter (12),
- Biegen des Profilrohres über einen Dorn zu einer Bourdon-Feder (1),
- Anlegen zweier Formstücke an die Kontur der vorgebogenen Bourdon-Feder (1) und
- Druckbeaufschlagung der Bourdon-Feder (1) mit einem 10 bis 100-fachen Druck über dem Nenndruck der Bourdon-Feder (1).

Vorteilhafte Ausgestaltungen des Herstellungsverfahrens sind den Unteransprüchen zu entnehmen.

Um eine wirtschaftliche Herstellung der Bourdon-Feder zu gewährleisten und so wenig Ausschuss wie möglich zu produzieren, wird ein anderer Weg zur Herstellung der Bourdon-Federn beschritten. Ausgehend von einem geraden Profilrohr mit einem annähernd rechteckförmigen Querschnitt wird dieses zunächst an einem ersten Profilrohrende verschlossen, während das zweite Profilrohrende in einem Werkzeughalter aufgenommen, vorzugsweise eingeklemmt wird oder mit einem Prozessträger verschweißt wird. Das Verschließen kann beispielsweise mit einem Endstück in Form einer Kappe erfolgen, die keine Veränderung des Profilquerschnittes erfordert. Die Kappe wird nach der Biegung der Bourdon-Feder nicht entfernt und in dieser Form weiterverwendet. Die Biegung des Profilrohres erfolgt über einen Dorn, wobei zunächst nicht die Idealform der Bourdon-Feder erreicht wird. Um beispielsweise Oberflächenverformungen zu beseitigen und die gewünschte Baugröße zu erhalten, werden zwei Formstücke an die Kontur der vorgebogenen Bourdon-Feder angelegt und eine Druckbeaufschlagung der Bourdon-Feder mit einem 10 bis 100-fachen Druck über dem Nennwert der Bourdon-Feder vorgenommen. Durch die Druckbeaufschlagung wird das gebogene Profilrohr an die beiden Formstücke angepresst, sodass die Oberfläche geglättet wird und hierbei eine plastische Verformung eintritt, sodass sich kleinere Anrisse selbstständig verschließen. Das hierbei angewendete Verfahren wird als Autofrettage bezeichnet. Durch die Anwendung der Autofrettage erfolgt zudem eine Materialverdichtung, wodurch die Dichtigkeit der Bourdon-Feder erhöht wird. Zur Druckbeaufschlagung während der Autofrettage kann hierbei ein Druck von bis zu 1000 Bar verwendet werden. Der besondere Vorteil dieses Herstellungsverfahren besteht darin, dass die Lebensdauer der Bourdon-Feder erheblich gesteigert werden kann.

Eine auf dieser Weise hergestellte Bourdon-Feder kann soweit sie einzeln hergestellt wird in einem Druckmessergerät eingebaut werden, wobei vorzugsweise eine Verschweißung mit einem Anschlussstück erfolgt, welches eine Druckbeaufschlagung der Bourdon-Feder ermöglicht. Diese Anschlussstücke werden auch als Prozessträger bezeichnet. Bei der Fertigung der Bourdon-Feder kann aber ohne weiteres je nach gewählter Größe und Kundenwunsch das Profilrohr unmittelbar mit einem Prozessträger verschweißt werden und im Anschluss der Biegevorgang erfolgen, sodass eine Bourdon-Feder mit Prozessträger hergestellt wird. Soweit kein Prozessträger gewünscht wird oder erst zu einem späteren Zeitpunkt zum Einsatz kommt, wird hierbei das Profilrohr in einem Werkzeughalter eingespannt, um den Biegevorgang vornehmen zu können.

In weiterer Ausgestaltung des Verfahrens ist vorgesehen, dass die gebogene Bourdon-Feder einer nachträglichen Wärmebehandlung unterzogen wird, wodurch Spannungen innerhalb der Bourdon-Feder aufgrund der vorgenommenen Biegung beseitigt werden.

Von besonderem Vorteil des angewendeten Verfahrens ist, dass die Verbindung zwischen Profilrohr, Endstück und/oder Prozessträger durch Laserschweißen ohne Schweißzusatzstoff erfolgt. Durch das Laserschweißen erfolgt somit kein Ausglühen der Verbindungsstellen und es entsteht kein Verzug, sodass die fertig zugeschnittenen Bourdon-Federn ohne besondere Justage in ein Manometer eingebaut werden können. Das Laserschweißen wird auch zur sofortigen oder späteren Verschweißung mit einem Prozessträger angewendet. Die Bourdon-Feder weist eine sehr hohe Reproduzierbarkeit durch das angewendete Verfahren auf, wobei die ausgangsseitig verwendeten Profilrohre bereits auf Maß zugeschnitten werden können. Durch den geringen Wärmeeintrag beim Laserschweißen wird dieser nicht auf die Bourdon-Feder übertragen, wodurch eine Verbesserung der Hysterese, Linearität und Streckdruckwerte erreicht wird.

In weiterer Ausgestaltung des Verfahrens ist vorgesehen, dass das Profilrohr mit Wachs oder Blei vor dem Biegen aufgefüllt wird. Die Verfüllung des Profilrohres erfolgt in der Regel dann, wenn besonders große Bourdon-Federn gebogen werden müssen, wobei nach erfolgter Biegung nach Entnahme aus dem Werkzeughalter das Wachs oder Blei aus dem Profilrohr oder durch den Prozessträger durch Erwärmen der Bourdon-Feder abfließen kann und nach dem erneuten Einklemmen in dem Werkzeughalter mithilfe zweier Formstücke und einer Druckbeaufschlagung die gewünschte Materialverdichtung hergestellt wird. Eine Druckbeaufschlagung ist sowohl bei Bourdon-Federn mit oder ohne vorheriger Befüllung vorgesehen. Sowohl bei der Biegung ohne Füllung des Profilrohres als auch mit Füllung können Profilrohre mit einem rechteckförmigen Querschnitt eingesetzt werden, wobei die Profilkanten abgerundet ausgeführt sein können. Soweit geringfügige Verformungen des Profilrohres nach erfolgter Biegung vorhanden sein sollten, werden diese spätestens mit der Autofrettage beseitigt. Darüber hinaus zeichnet sich das Verfahren dadurch aus, dass die Federform mit einem rechteckförmigen Profilrohr flach gebogen werden kann, ohne das eine Verringerung der Lebensdauer der Bourdon-Federn durch eine Verformung der Kanten eintritt. Durch das Autofretieren wird im Weiteren eine Überlastsicherheit erreicht, die bei hohem Drücken von Bedeutung ist. Ferner besteht die Möglichkeit, dass das erste Profilrohrende mit einer Flanschscheibe verschweißt wird, beispielsweise durch Laserverschweißung, um zu einem späteren Zeitpunkt eine Verbindung mit dem Prozessträger oder Federträger durch Schweißen herzustellen. Die Flanschscheibe kann im weiteren dazu verwendet werden, dass diese zum Klemmen in einem Werkzeughalter mit korrespondierender Klemmvorrichtung verwendet wird.

Zur Anwendung des Verfahrens ohne Prozessträger wird ein Werkzeughalter verwendet, der das erste Profilrohrende einklemmend aufnimmt und über mindestens ein Dichtungselement den Außenbereich des Rohres abdichtet. Die Abdichtung ist deshalb erforderlich, weil über den Werkzeughalter im Innenraum des Rohres ein Druck von bis zu 1000 Bar entstehen soll. Die Abdichtung erfolgt vorzugsweise über O-Ringe, die innerhalb des Werkzeughalters in einer Nut einliegen und beim Einschieben des zweiten Profilrohrendes sich an die Außenwandung des Rohres anlegen und abdichten. Gegebenenfalls können auch alternative Dichtungselemente zum Einsatz kommen, soweit sichergestellt ist, dass die Außenwandung des Rohres gegenüber dem Werkzeughalter abgedichtet wird. Alternativ besteht die Möglichkeit, dass ein Werkzeughalter verwendet wird, welcher einen abgedichteten Flanschhalter aufweist, um eine Bourdon-Feder aufzunehmen, die mit einer Flanschscheibe an ihrem ersten Ende verschweißt ist. Beide Möglichkeiten garantieren eine zuverlässige Abdichtung um den Innenraum des Rohres mit einem Druck von bis 1000 bar zu beaufschlagen.

Der Werkzeughalter besitzt im weiteren einen Fluideingang, welcher mit dem Innenraum des Rohrendes über einen Kanal zur Druckbeaufschlagung verbunden ist. Somit kann ein Fluid über den Kanal unmittelbar in den Innenraum des Profilrohrendes gelangen, um eine Autofrettage vornehmen zu können.

Das Profilrohr selbst kann aus Stahl, Edelstahl, einer Sonderlegierung oder aus Messing bestehen und wird vor dem Biegen in der Regel gezogen. Mithilfe der Profilrohre können hierbei Bourdon-Federn in den Nenngrößen 40, 63, 100 und 160 hergestellt werden. Aufgrund der Verschweißung mithilfe der Lasertechnik und ohne Schweißzusatzstoff entstehen keine Verunreinigungen im Innenraum der Bourdon-Feder und es tritt somit auch keine Spaltkorrosion nach der Herstellung auf. Nach erfolgter Fertigstellung der Bourdon-Federn können diese in herkömmlicherweise gestempelt werden. Soweit keine Verunreinigungen vorhanden sind und ein absolut sauberes Schweißergebnis vorliegt, eignen sich die Bourdon-Federn hervorragend für die Reinstgasindustrie. Die Bourdon-Federn werden hierbei als Rohlinge angeboten und können von den Erwerbern beispielsweise mit einem Prozessträger verschweißt werden, der die Möglichkeit bietet, das Druckmessgerät an vorhandene Rohrleitungssysteme anzuschließen.

Durch eine ganzheitliche Temperaturbehandlung der Bourdon-Feder und des Prozess- oder Federträgers wird eine sehr gute Hysterese mit Abweichungen von 0,2 % erreicht, während nach den bekannten Herstellungsverfahren der Bourdon-Federn Abweichungen von 0,4 bis 0,6 % entstehen.

Die vorliegende Erfindung zeichnet sich somit im Wesentlichen dadurch aus, dass das neuartige Verfahren zur Herstellung der Bourdon-Feder von einem geraden gezogenen Profilrohr ausgeht, welches einen annähernd rechteckförmigen Querschnitt aufweist. Nach dem Anschweißen eines Endstücks an ein erstes Profilrohrende, vorzugsweise über ein Laserschweißverfahren besteht die Möglichkeit das zweite Profilrohrende mit einem Prozessträger zu verbinden oder das Profilrohrende in einem Werkzeughalter abdichtend aufzunehmen, sodass der eigentliche Verfahrensprozess zur Biegung der Bourdon-Feder eingeleitet werden kann. Hierbei erfolgt das Biegen des Profilrohres zunächst über einen Dorn. Ein wesentlicher Verfahrensschritt besteht im Anschluss darin, dass zwei Formstücke an die Kontur der vorgebogenen Bourdon-Feder angelegt werden und eine Druckbeaufschlagung der Bourdon-Feder mit einem 10 bis 100-fachen Druck über dem Nennwert der Bourdon-Feder erfolgt. Diese Druckbeaufschlagung als Autofrettage bezeichnet, führt zu einer Materialverdichtung und gewünschten Formgebung der Bourdon-Feder, die im Weiteren dazu führt, dass diese ohne weitere Nachbearbeitung in beispielsweise einem Manometer eingebaut werden kann. Spätere Justagearbeiten sind somit nicht erforderlich.

Die Erfindung wird im Weiteren anhand der Figuren nochmals erläutert.

Es zeigt
- Fig. 1: ein gerades Profilrohr vor dem Einklemmen in einem Werkzeughalter,
- Fig. 2: das Profilrohr nach erfolgtem Einklemmen in einem Werkzeughalter,
- Fig. 3: in einer Seitenansicht eine Bourdon-Feder mit Werkzeughalter und einer Bearbeitungsmöglichkeit zur Herstellung der notwendigen Krümmung,
- Fig. 4: eine Bourdon-Feder mit Werkzeughalter nach erfolgter Bearbeitung mit einliegendem Dorn,
- Fig. 5: in einer teilweisen geschnittenen perspektivischen Ansicht eine Bourdon-Feder mit Werkzeughalter und Formstücken zur Druckbeaufschlagung,
- Fig. 6: in einer Seitenansicht eine fertiggestellte Bourdon-Feder mit Prozessträger,
- Fig. 7: in einer weiteren Seitenansicht die Bourdon-Feder mit Prozessträger gemäß Figur 6
- Fig. 8: in einer Seitenansicht eine fertiggestellte Bourdon-Feder mit Prozessträger und Messwerk,
- Fig. 9: in einer Seitenansicht ein Profilrohr mit angeschweißtem Prozessträger,
- Fig. 10: in einer Seitenansicht eine Bourdon-Feder mit Prozessträger und einer Bearbeitungsmöglichkeit zur Herstellung der notwendigen Krümmung,
- Fig. 11: eine Bourdon-Feder mit Prozessträger nach erfolgter Bearbeitung mit einliegendem Dorn,
- Fig. 12: in einer teilweisen geschnittenen Ansicht eine Bourdon-Feder mit Prozessträger und Formstücken zur Druckbeaufschlagung und
- Fig. 13: in drei Querschnittsansichten jeweils eine Bourdon-Feder.

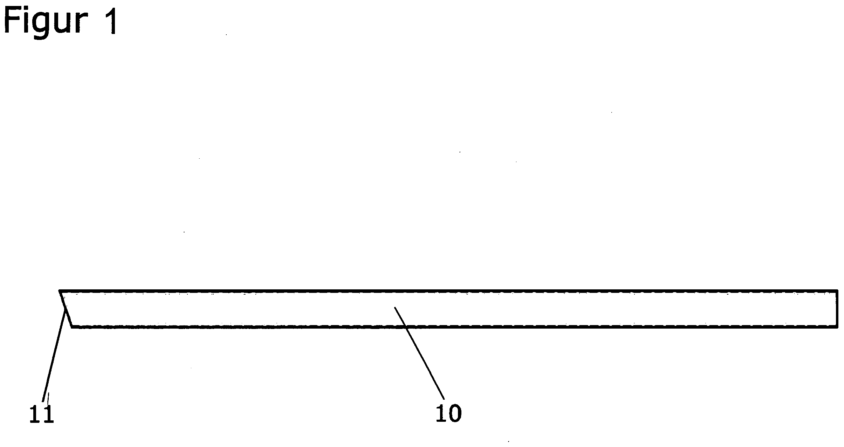

Figur 1 zeigt in einer Seitenansicht ein Profilrohr 10, welches an einem Ende rechtwinklig ausgeführt ist und an dem gegenüberliegenden Ende eine Abschrägung 11 aufweist. Die Abschrägung 11 ist zur Anlage und Verschweißung mit einem späteren Prozessträger gedacht.

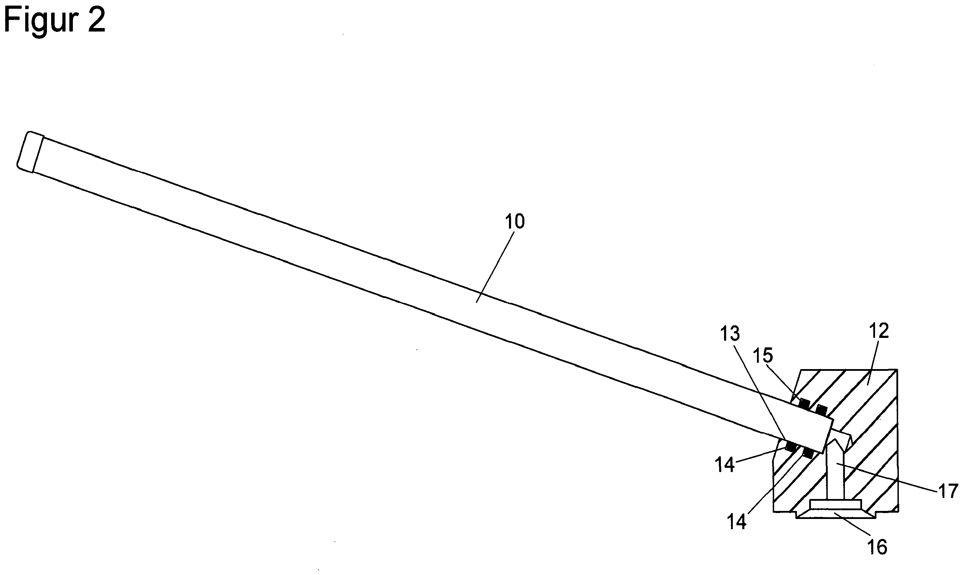

Figur 2 zeigt in einer Seitenansicht das noch nicht gebogene Profilrohr 10 und einen Werkzeughalter 12. Ein erstes Ende des Profilrohrs 10 ist hierbei mithilfe eines Laserverfahrens mit einer Kappe 8 verschweißt, sodass der Innenraum des Profilrohres einseitig verschlossen ist. Das offene zweite Ende des Profilsrohrs ist in einem Werkzeughalter 12 aufgenommen. Der Werkzeughalter 12 weist einen Durchbruch 13 auf, in welche das Profilrohr 10 eingeschoben werden kann. Zur Abdichtung sind im gezeigten Ausführungsbeispiel zwei Dichtungen 14 in Form von O-Ringen vorgesehen. Die O-Ringe 14 ruhen hierbei in einer Ausnehmung 15 des Werkzeughalters 12. Der Werkzeughalter 12 besitzt einen Fluideingang 16, welcher über einen Verbindungskanal 17 mit dem Innenraum des Rohres 10 verbunden ist. Auf diese Weise kann somit über den Fluideingang 16 und dem Verbindungskanal 17 eine Druckbeaufschlagung des Rohres 10 erfolgen. Die Druckbeaufschlagung kann mithilfe eines gasförmigen oder flüssigen Mediums erfolgen und wird vorgenommen, um den letzten Arbeitsschritt zur Herstellung der Bourdon-Feder 1 vorzunehmen.

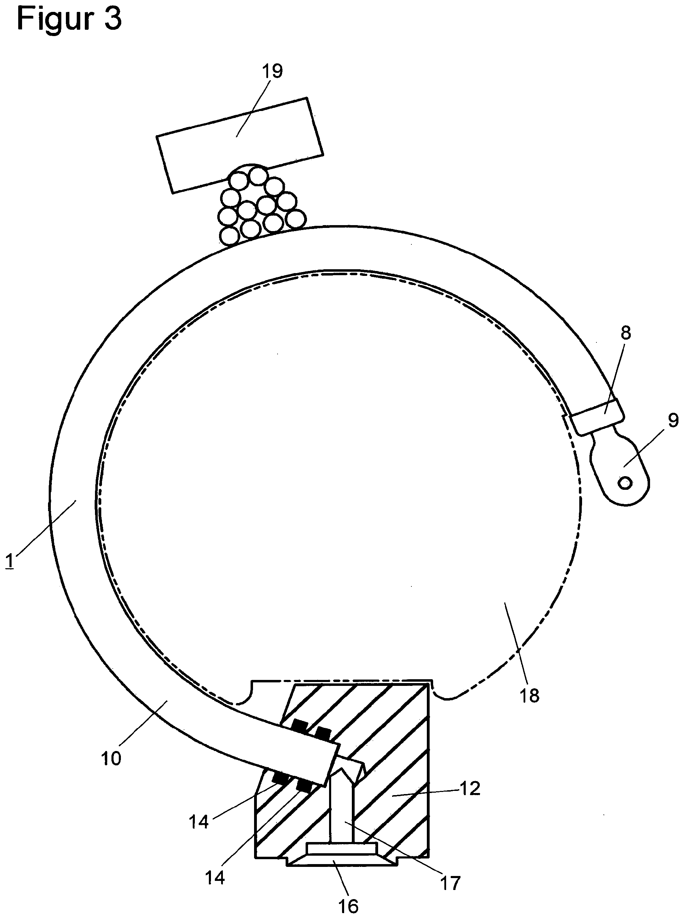

Figur 3 zeigt eine nahezu fertig vorgebogene Bourdon-Feder 1 mit Werkzeughalter 12 und einem Dorn, um den die Bourdon-Feder 1 entweder gebogen oder wie im gezeigten Ausführungsbeispiel mithilfe eines Hammerwerkzeuges 19 die notwendige Krümmung erhält. Figur 3 zeigt die bereits vollständig gekrümmte Bourdon-Feder 1 mit Kappe 8 und Anschlussfahne 9.

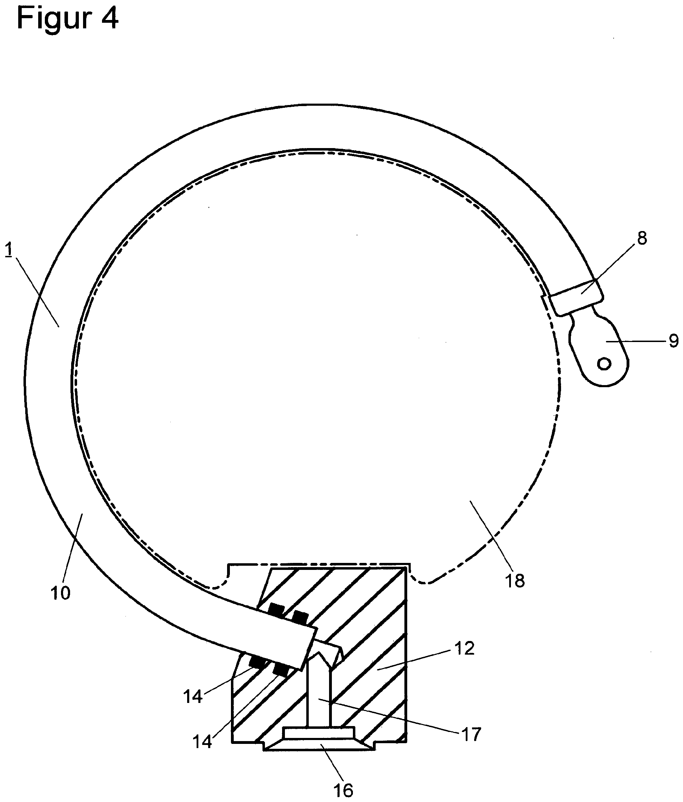

Figur 4 zeigt in einer Seitenansicht nochmals die fertiggestellte Bourdon-Feder 1 mit Werkzeughalter 12 nach erfolgter Fertigstellung. Durch den Verformungsprozess der Bourdon-Feder 1, entweder durch Hämmern oder Walzen um einen Dorn 18 kann nicht ausgeschlossen werden, dass die Oberfläche der Bourdon-Feder 1 Unregelmäßigkeiten aufweist, die einerseits unerwünscht sind und andererseits zur Beeinflussung der Hysterese führen können. In einem weiteren Verfahrensschritt wird daher die Bourdon-Feder 1 mit einem 10 bis 100-fach höheren Druck als dem eigentlichen Nenndruck beaufschlagt, damit eine Materialverdichtung des Profilrohres vorgenommen werden kann und gleichzeitig eine Glättung der Außenflächen innerhalb zweier Formstücke erfolgt.

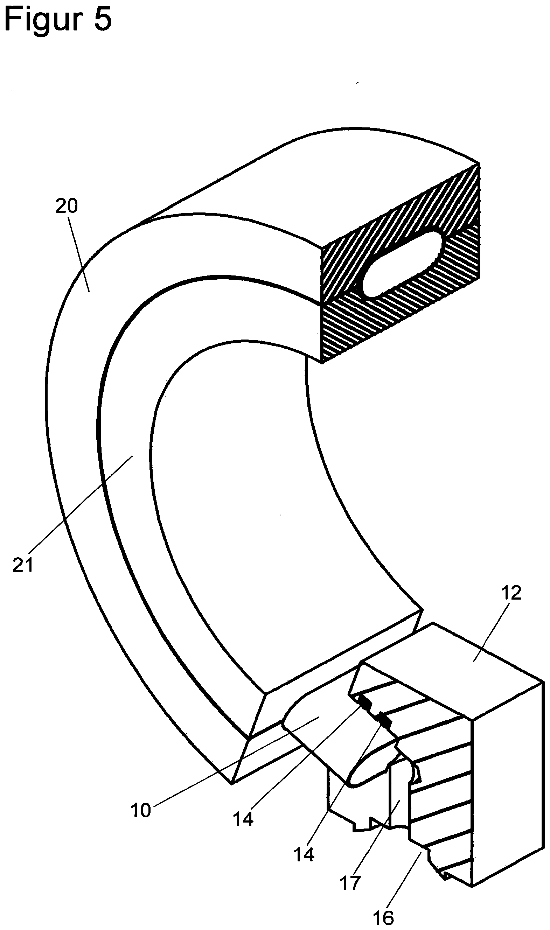

Figur 5 zeigt den letzten Arbeitsschritt zur Herstellung der Bourdon-Feder 1 mit Werkzeughalter 12, und zwar werden an die Bourdon-Feder 1 zwei Formstücke 20, 21 angelegt, die die endgültige Form der Bourdon-Feder 1 bestimmen. Nach erfolgter Anlegung der Formstücke 20, 21 wird über den Fluideingang 16 und Verbindungskanal 17 das unter Druck stehende Fluid in das Innenrohr der Bourdon-Feder 1 eingeleitet. Sowohl der Verbindungskanal 17 als auch der Fluideingang 16 sind Bestandteil des Werkzeughalters 12 in dem das Rohr 10 abdichtend eingeklemmt ist. Die Abdichtung erfolgt hierbei über die beiden O-Ringe 14. Die Bourdon-Feder 1 wird hierbei mit einem Druck der 10 bis 100-fach höher liegt als der Nenndruck der Bourdon-Feder 1 beaufschlagt. Hierdurch wird erreicht, dass das Material des Profilrohres 10 einerseits innerhalb der Formstücke 20, 21 verdichtet wird und gleichzeitig die äußere Fläche geglättet wird. Die beiden Formstücke 20, 21 werden hierbei durch geeignete Maßnahmen zusammengehalten. Nach erfolgter Druckbeaufschlagung ist die Bourdon-Feder 1 fertiggestellt und kann mit beispielsweise einem Prozessträger verschweißt werden.

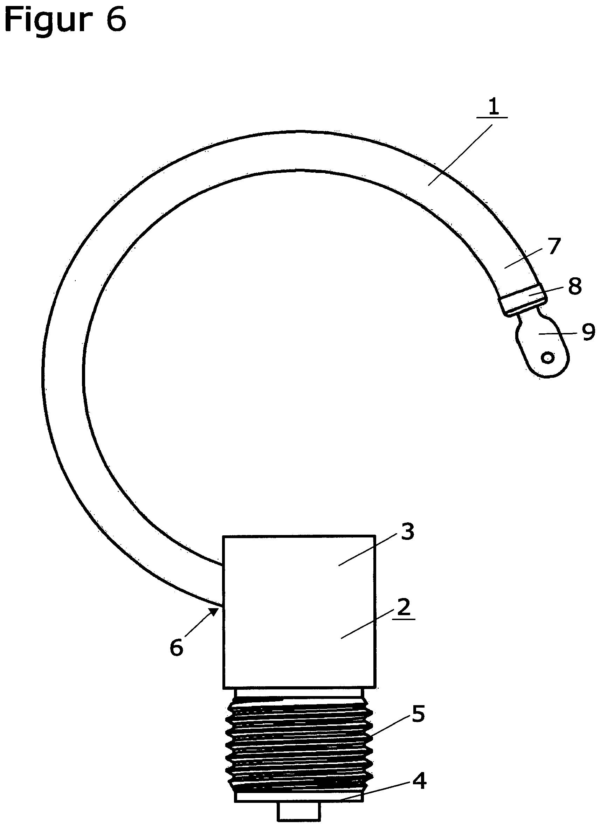

Figur 6 zeigt in einer Seitenansicht eine Bourdon-Feder 1 mit Prozessträger 2. Der Prozessträger 2 besteht aus einem quaderförmigen Grundkörper 3, welcher mit einem verschraubten Anschluss 4 mit Außengewinde 5 ausgestattet ist. Die Bourdon-Feder 1 besteht aus einem gebogenen Profilrohr und wird über eine Schweißung 6 mit dem Prozessträger 2 verbunden. Das freie Ende 7 der Bourdon-Feder 1 ist mit einer Kappe 8 und einer Anschlussfahne 9 verschweißt, sodass die Bourdon-Feder 1 mit ihrem freien Ende 7 verschlossen ist. Die Bourdon-Feder 1 ist hierbei hohlwandig ausgebildet, wobei der Innenraum über eine nicht gezeigte Bohrung mit dem zu messenden Medium über die verjüngte Anschlussverschraubung 4 verbunden ist. Der Messstoff dringt hierbei über den Prozessträger 2 in den Hohlraum der Bourdon-Feder 1 ein und bewirkt bei einer Druckerhöhung eine Aufweitung der Bourdon-Feder 1, sodass über die Anschlussfahne 9 diese Bewegung auf ein nicht dargestelltes Messwerk übertragen werden kann.

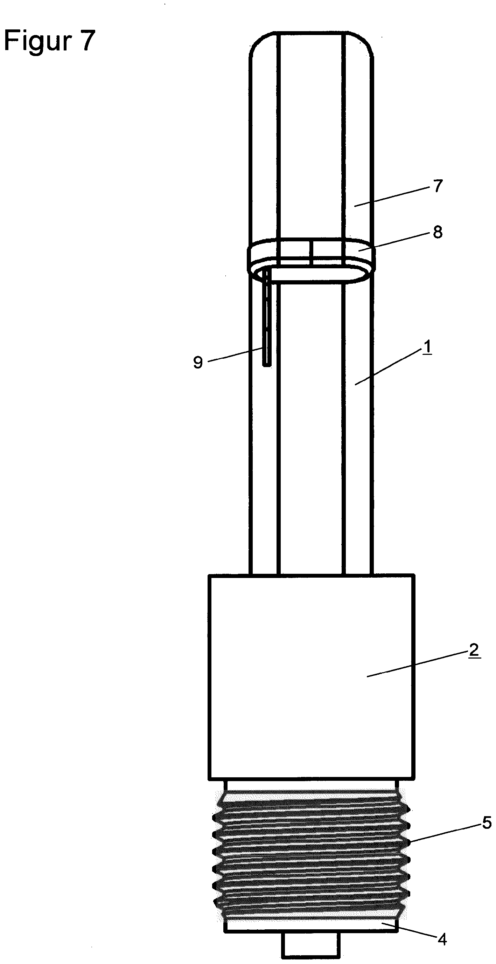

Figur 7 zeigt in einer Seitenansicht die Bourdon-Feder 1 mit Prozessträger 2 gemäß Figur 6. Der Prozessträger 2 mit Außengewinde 5 entspricht der Darstellung gemäß Figur 6, wobei dieser vorzugsweise rechteckförmig ausgebildet ist. Die Bourdon-Feder 1 wird demgegenüber von ihrer Schmalseite gezeigt. Aus dieser Ansicht wird deutlich, dass im gezeigten Ausführungsbeispiel ein Profilrohr verwendet wurde, welches abgerundete Schmalseiten aufweist. Die vorhandene Rundung ist in diesem Fall sehr ausgeprägt, es besteht aber ohne weiteres die Möglichkeit nahezu rechteckförmige Profilrohre einzusetzen, die nur eine kleine Rundung aufweisen.

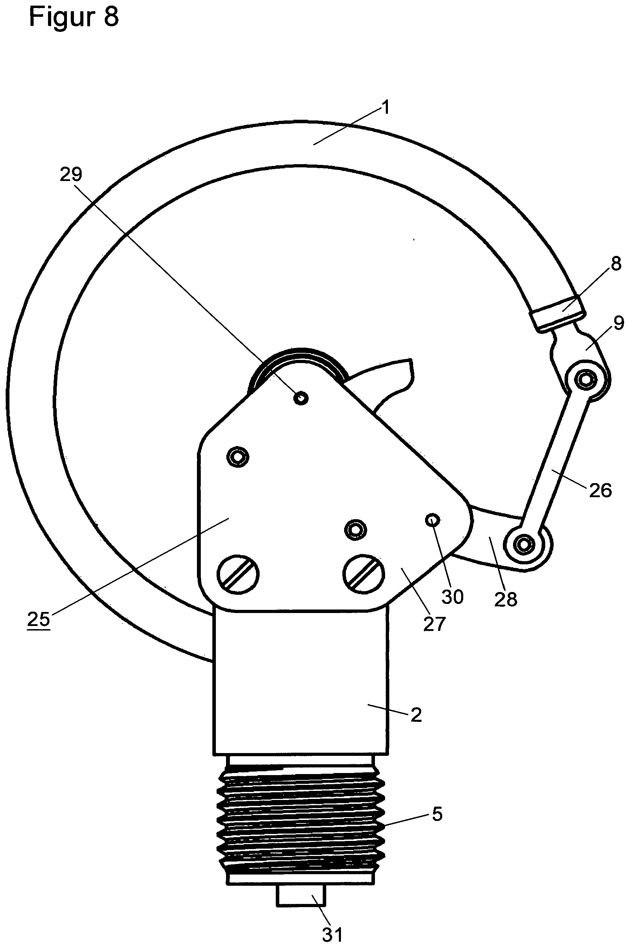

Figur 8 zeigt ein mögliches Anwendungsbeispiel für die nach dem erfindungsgemäßen Verfahren hergestellte Bourdon-Feder 1. In einer Seitenansicht wird eine fertiggestellte Bourdon-Feder 1 mit Prozessträger 2 und einem Messwerk 25 dargestellt. Bei der Bourdon-Feder 1 handelt es sich um eine Feder, wie sie in den vorhergehenden Figuren dargestellt ist und mithilfe zweier Formstücke in die endgültige Form gebracht wurde. Die Bourdon-Feder 1 ist einenends mit dem Prozessträger 2 laserverschweißt und anderenends über die Kappe 8 und einer Anschlussfahne 9 sowie einem Verbindungselement 26 mit dem Messwerk 25 verbunden. Von dem Messwerk 25 ist nur eine äußere Montageplatte 27 ersichtlich, welche mit dem Prozessträger 2 verschraubt ist. Die Bewegung der Bourdon-Feder 1 wird über das Anschlusselement 26 auf ein frei zugängliches Ende eines Betätigungshebels 28 übertragen, welcher über eine Verzahnung mit einem Zahnradritzel kämmt. Das aus dieser Ansicht nicht ersichtliche Zahnradritzel ist hierbei auf einer Drehachse 29 angeordnet, welche gleichzeitig zur Aufnahme eines ebenfalls nicht dargestellten Zeigers vorgesehen ist. Das Anschlusselement 28 ist hierbei in einem Drehpunkt 30 gelagert.

Die gesamte Anordnung bestehend aus dem Prozessträger 2, der Bourdon-Feder 1 und dem Messwerk 25 wird hierbei in einem Gehäuse aufgenommen, welches das Messwerk vor Verschmutzungen schützt und zur Befestigung einer Skala einerseits verwendet wird. Der Zeiger wird danach auf der Drehachse 29 befestigt. Der Prozessträger 2 wird mithilfe des Gewindes 5 in ein vorhandenes Rohrleitungssystem eingeschraubt oder eine entsprechende Einrichtung, wobei durch einen Kanal der innerhalb des Stutzens 31 des Prozessträgers 2 verläuft, das zu messende Medium in die Bourdon-Feder 1 gelangt und in Abhängigkeit des Druckes die Bourdon-Feder 1 ihre Krümmung verändert, sodass diese Bewegung über das Verbindungselement 26 und Anschlusselement 28 auf das Messwerk 25 und damit auf die Drehachse 29 übertragen, sodass ein Zeigerauschlag erfolgt. Aufgrund einer hohen Produktionsgenauigkeit der Bourdon-Feder 1 entfallen hierbei die üblichen Justierarbeiten.

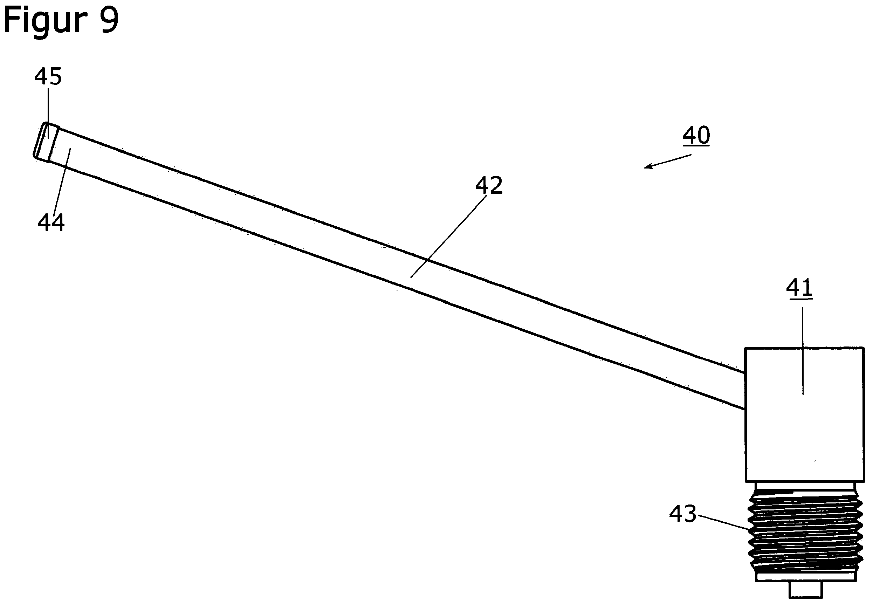

Die nachfolgenden Figuren 9 bis 13 zeigen die einzelnen Arbeitsschritte zur Herstellung der gekrümmten Bourdon-Feder 40 mit Prozessträger 41.

Figur 9 zeigt in einer Seitenansicht das noch nicht gebogene Profilrohr 42 und den Prozessträger 41 mit Außengewinde 43. Das Profilrohr 42 ist hierbei mithilfe eines Laserverfahrens mit dem Prozessträger 41 entlang der Abschrägung verschweißt. Des Weiteren wurde das freie Ende 44 des Profilrohres 42 mit einer Kappe 45 versehen, sodass der Innenraum des Profilrohres 42 endseitig verschlossen ist. Das an den Prozessträger 41 angeschweißte Ende dient hierbei über einen nicht dargestellten Kanal zur Einleitung der zu messenden Prozessflüssigkeit oder zur Druckbeaufschlagung mithilfe eines Druckmediums, um den letzten Arbeitsschritt zur Herstellung der Bourdon-Feder 41 vorzunehmen.

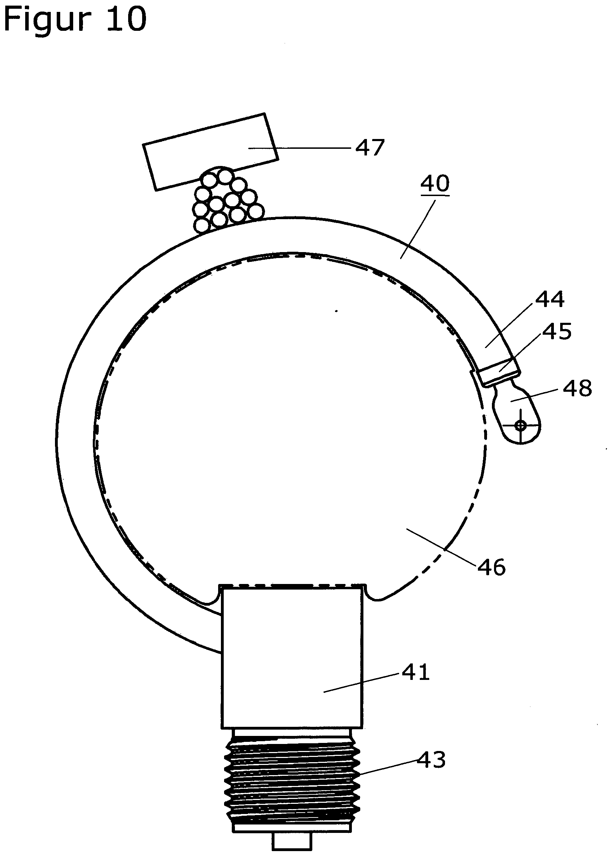

Figur 10 zeigt eine nahezu fertige Bourdon-Feder 40 mit Prozessträger 41 und einem Dorn 46, um den die Bourdon-Feder 40 entweder gebogen oder wie im gezeigten Ausführungsbeispiel mithilfe eines Hammerwerkzeuges 47 die notwendige Krümmung erhält. Figur 10 zeigt die bereits vollständig gekrümmte Bourdon-Feder 40 mit Kappe 45 und Anschlussfahne 48.

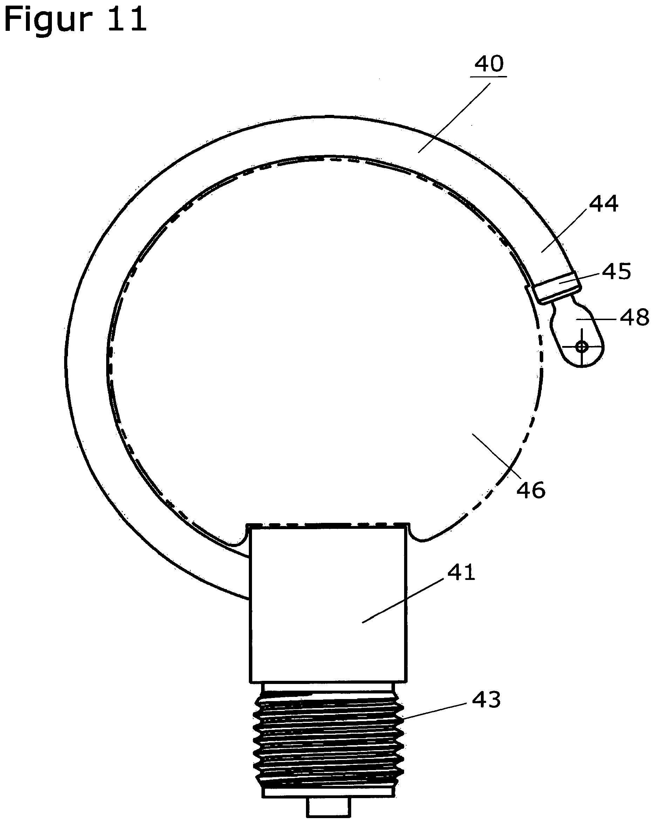

Figur 11 zeigt in einer Seitenansicht nochmals die fertiggestellte Bourdon-Feder 40 mit Prozessträger 41 nach erfolgter Fertigstellung. Durch den Verformungsprozess der Bourdon-Feder 40 entweder durch Hämmern oder Walzen um einen Dorn 46 kann nicht ausgeschlossen werden, dass die Oberfläche der Bourdon-Feder 40 Unregelmäßigkeiten aufweist, die einerseits unerwünscht sind und andererseits zur Beeinflussung der Hysterese führen können. In einem weiteren Verfahrensschritt wird daher die Bourdon-Feder 40 mit einem 10 bis 100-fach höheren Druck als dem eigentlichen Nenndruck beaufschlagt, damit eine Materialverdichtung des Profilrohres vorgenommen werden kann und gleichzeitig eine Glättung der Außenflächen innerhalb zweier Formstücke erfolgt.

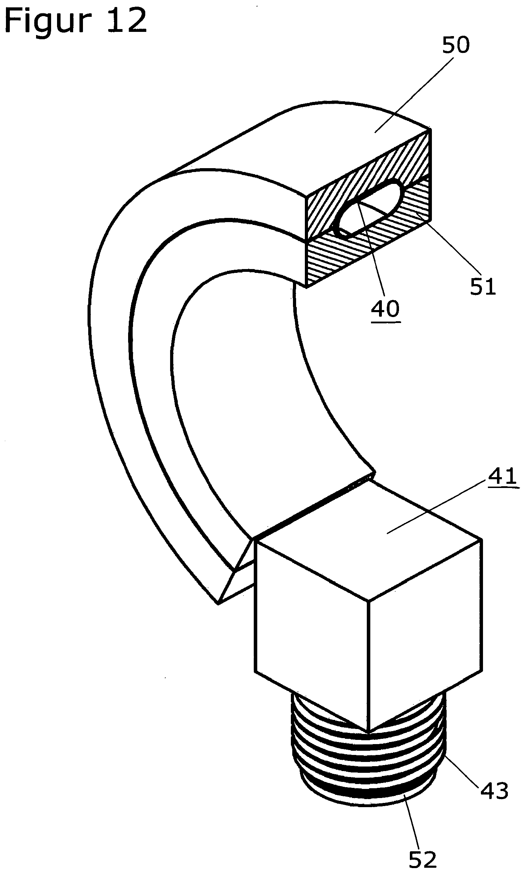

Figur 12 zeigt den letzten Arbeitsschritt zur Herstellung der Bourdon-Feder 40 mit Prozessträger 41, und zwar werden an die Bourdon-Feder 40 zwei Formstücke 50, 51 angelegt, die die endgültige Form der Bourdon-Feder 40 bestimmen. Nach erfolgter Anlegung der Formstücke 50, 51 wird über die Anschlussverschraubung 52 mit Außengewinde 43 beziehungsweise über den nicht sichtbaren Verbindungskanal ein Druckmedium in die Bourdon-Feder 40 eingeleitet, und zwar mit einem Druck der 10 bis 100-fach höher liegt, als der Nenndruck der Bourdon-Feder 40. Hierdurch wird erreicht, dass das Material des Profilrohres einerseits innerhalb der Formstücke 50, 51 verdichtet wird und gleichzeitig die äußere Fläche geglättet wird. Die beiden Formstücke 50, 51 werden hierbei durch geeignete Maßnahmen zusammen gehalten. Nach erfolgter Druckbeaufschlagung ist die Bourdon-Feder 40 fertiggestellt und kann zusammen mit dem Prozessträger 41 verbaut werden.

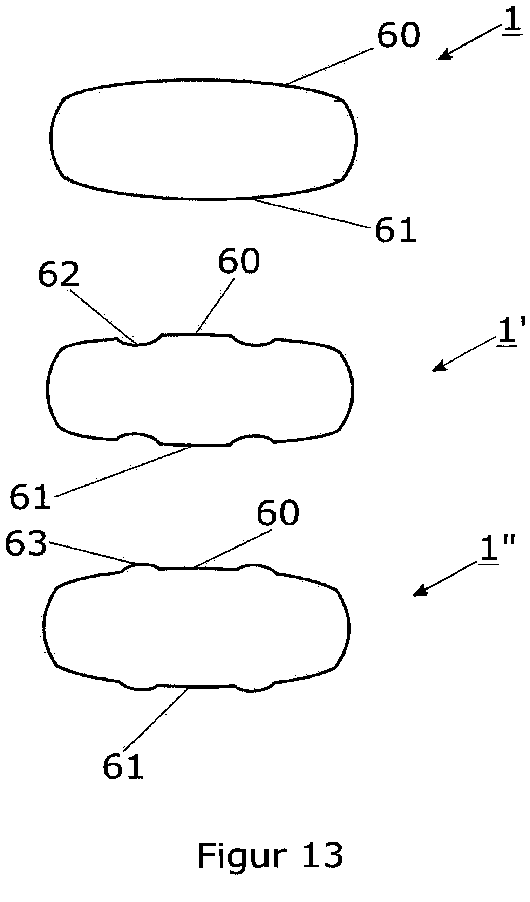

Figur 13 zeigt in drei Einzelansichten den Querschnitt einer Bourdon-Feder 1, 1', 1" nach erfolgter Verformung, wobei die beiden Außenflächen 60, 61 eine leicht gewölbte Außenform aufweisen, welche durch nochmaliges Nachdrücken abgeflacht werden kann, sodass im günstigsten Fall ein annähernd paralleler Verlauf der beiden Außenflächen 60, 61, wie durch die skizzierte Linie angedeutet vorliegen kann. Das Nachdrücken erfolgt hierbei durch die Formstücke 50, 51 der erfindungsgemäßen Vorrichtung.

Durch das Nachdrücken kann der Federweg der Bourdon-Feder 1 auf einen Wert unter 1 % Genauigkeit eingestellt werden, sodass eine Nachjustierung nach dem Einbau in ein Druckmessgerät entfällt. Nach erfolgter Biegung der Bourdon-Feder 1 verläuft die Außenwandung im mittleren Bereich nicht parallel, sondern besitzt eine leicht gewölbte Form. Durch ein späteres Nachdrücken können die Außenflächen 60, 61 zusammengedrückt werden, sodass zwei annähernd parallel verlaufende Außenflächen 60, 61 entstehen, wobei ein Spielraum von 3 bis 4 zehntel mm vorliegt. Mit dem Zusammendrücken der Außenflächen 60, 61 wird hierbei der Federweg verändert. Hierzu werden die beiden Formstücke 50, 51 eingesetzt.

Die beiden anderen Querschnittsdarstellungen zeigen weitere alternative Ausführungsformen, die mit zwei anderen Formstücken hergestellt werden können. Eine weitere Ausfertigung einer Bourdon-Feder 1' zeigt auf ihren Außenflächen 60, 61 jeweils Sicken 62. Eine weitere Bourdon-Feder 1" zeigt auf ihren Außenflächen 60, 61 demgegenüber Ausformungen 63. Hierzu besteht die Notwendigkeit entsprechende Formstücke einzusetzen, damit entweder die Sicken 62 oder die Ausformungen 63 in den Rohling eingedrückt werden können. Mithilfe dieser Verformung kann der Messbereich der Bourdon-Feder 1, 1', 1" von beispielsweise 4 Bar auf bis zu 6 Bar erhöht werden, wobei der Federweg wiederum auf einen Wert unter 1 % Genauigkeit eingestellt werden kann.

Die Bourdon-Feder 1, 1', 1" kann unabhängig von der Querschnittsform bei verschiedenen Druckmessgeräten für unterschiedliche Druckbereiche eingesetzt werden.

### Bezugszeichenliste

- 1: Bourdon-Feder
- 2: Prozessträger
- 3: Grundkörper
- 4: Anschlussverschraubung
- 5: Außengewinde
- 6: Schweißung
- 7: freies Ende
- 8: Kappe
- 9: Anschlussfahne
- 10: Profilrohr
- 11: Abschrägung
- 12: Werkzeughalter
- 13: Durchbruch
- 14: O-Ringe
- 18: Dorn
- 19: Hammerwerkzeug
- 20: Formstück
- 21: Formstück
- 25: Messwerk
- 26: Verbindungselement
- 27: Montageplatte
- 28: Betätigungshebel
- 29: Drehachse
- 30: Drehpunkt
- 31: Stutzen
- 40: Bourdon-Feder
- 41: Prozessträger
- 42: Profilrohr
- 43: Außengewinde
- 44: freies Ende
- 45: Kappe
- 46: Dorn
- 47: Hammerwerkzeug
- 48: Anschlussfahne
- 50: Formstück
- 51: Formstück
- 52: Anschlussverschraubung
- 60: Außenfläche
- 61: Außenfläche
- 62: Sicken
- 63: Ausformung

## Patentansprüche

1. Verfahren zur Herstellung einer Bourdon-Feder (1, 40) mit oder ohne einen Prozessträger (2, 41), aufweisend zumindest folgende Arbeitsschritte:
- Verwendung eines geraden Profilrohres (10, 42) mit einem annähernd rechteckförmigen Querschnitt,
- Verschließen eines Endes des Profilrohres (10, 42) durch ein angeschweißtes Endstück,
- Anschweißen des zweiten Endes des Profilrohres (10, 42) an einen Prozessträger (2, 41) oder Aufnahme des zweiten Endes des Profilrohrs (10, 42) in einem Werkzeughalter (12),
- Biegen des Profilrohres (10, 42) über einen Dorn (18, 46) zu einer Bourdon-Feder (1, 40),
**gekennzeichnet durch**
- Anlegen zweier Formstücke (20, 21, 50, 51) an die Kontur der vorgebogenen Bourdon-Feder (1, 40) und
- Druckbeaufschlagung der Bourdon-Feder (1, 40) mit einem 10 bis 100-fachen Druck über dem Nenndruck der Bourdon-Feder (1, 40).

2. Verfahren nach Anspruch 1,
**dadurch gekennzeichnet,**
**dass** bei Druckbeaufschlagung ein Druck von bis zum 1000 Bar verwendet wird.

3. Verfahren nach Anspruch 1 oder 2,
**dadurch gekennzeichnet,**
**dass** die gebogene Bourdon-Feder (1, 40) einer nachträglichen Wärmebehandlung unterzogen wird.

4. Verfahren nach einem der Ansprüche 1, 2 oder 3,
**dadurch gekennzeichnet,**
**dass** die Verbindung zwischen Profilrohr (10, 42), Endstück und/oder Prozessträger (2, 41) durch Laserschweißen ohne Schweißzusatzstoff erfolgt.

5. Verfahren nach einem der Ansprüche 1 bis 4,
**dadurch gekennzeichnet,**
**dass** das Profilrohr (10, 42) mit Wachs oder Blei vor dem Biegen aufgefüllt wird.

6. Verfahren nach einem der Ansprüche 1 bis 5,
**dadurch gekennzeichnet,**
**dass** das Profilrohr (10, 42) abgerundete Kanten aufweist, und/oder dass das Profilrohr (10, 42) am ersten Rohrende mit einer Flanschscheibe verschweißt wird.

7. Verfahren nach einem der Ansprüche 1 bis 6,
**dadurch gekennzeichnet,**
**dass** das Profilrohr (10, 42) aus Stahl, Edelstahl, einer Sonderlegung oder aus Messing besteht.

8. Verfahren nach einem der Ansprüche 1 bis 7,
**dadurch gekennzeichnet,**
**dass** der Werkzeughalter (12) das erste Ende des Profilrohres (10, 42) einklemmend aufnimmt und über mindestens ein Dichtungselement den Außenbereich des Profilrohres (10, 42) abdichtet, und/oder dass der Werkzeughalter (12) einen abgedichteten Flanschhalter aufweist, welcher zur Aufnahme der Flanschscheibe des ersten Endes des Profilrohres (10, 42) vorgesehen ist.

9. Verfahren nach einem der Ansprüche 1 bis 8,
**dadurch gekennzeichnet,**
**dass** der Werkzeughalter (12) einen Fluid-Eingang (16) aufweist, welcher mit dem Innenraum des Profilrohres (10, 42) über einen Verbindungskanal (17) zur Druckbeaufschlagung verbunden ist.

10. Verfahren nach einem der Ansprüche 1 bis 9,
**dadurch gekennzeichnet,**
**dass** die Bourdon-Feder (1, 40) in den Nenngrößen 40, 63, 100 und 160 hergestellt wird.

11. Verfahren nach einem der Ansprüche 1 bis 10,
**dadurch gekennzeichnet,**
**dass** die Bourdon-Feder (1, 40) keine Verunreinigung im Innenraum oder Spaltkorrosion nach der Herstellung aufweist.

12. Verfahren nach einem der Ansprüche 1 bis 11,
**dadurch gekennzeichnet,**
**dass** die Bourdon-Feder (1, 40) nach der Herstellung mit den Kenndaten gestempelt wird.

## Claims

1. Method of manufacturing a Bourdon tube (1, 40) with or without a process support (2, 41), comprising at least the following working steps:
- using a straight special section tube (10, 42) with an approximately rectangular cross-section,
- closing one end of the special section tube (10, 42) with a welded end part,
- welding the second end of the special section tube (10, 42) to a process support (2, 41) or receiving the second end of the special section tube (10, 42) in a tool holder (12),
- bending the special section tube (10, 42) into a Bourdon tube (1, 40) over a plug (18, 46),
**characterized by**
- placing two mouldings (20, 21, 50, 51) against the contour of the pre-bent Bourdon tube (1, 40), and
- applying pressure to the Bourdon tube (1, 40) at a pressure that is 10 to 100 times above the nominal pressure of the Bourdon tube (1, 40).

2. Method according to claim 1,
**characterized in**
**that** during the application of pressure, a pressure of up to 1000 bar is used.

3. Method according to claim 1 or 2,
**characterized in**
**that** the bent Bourdon tube (1, 40) is subjected to subsequent heat treatment.

4. Method according to any one of claims 1, 2 or 3,
**characterized in**
**that** the connection between the special section tube (10, 42), the end part and/or the process support (2, 41) is effected by laser welding without any filler materials.

5. Method according to any one of claims 1 to 4,
**characterized in**
**that** the special section tube (10, 42) is filled with wax or lead before bending.

6. Method according to any one of claims 1 to 5,
**characterized in**
**that** the special section tube (10, 42) has rounded edges, and/or that the special section tube (10, 42) is welded to a flanged wheel at the first tube end.

7. Method according to any one of claims 1 to 6,
**characterized in**
**that** the special section tube (10, 42) consists of steel, high-grade steel, a special alloy or of brass.

8. Method according to any one of claims 1 to 7,
**characterized in**
**that** the tool holder (12) receives the first end of the special section tube (10, 42) in a pinching manner and seals the outer region of the special section tube (10, 42) by at least one sealing element, and/or that the tool holder (12) comprises a sealed flange holder which is provided for receiving the flanged wheel of the first end of the special section tube (10, 42).

9. Method according to any one of claims 1 to 8,
**characterized in**
**that** the tool holder (12) has a fluid inlet (16) that is connected with the interior of the special section tube (10, 42) via a junction canal (17) for pressure application.

10. Method according to any one of claims 1 to 9,
**characterized in**
**that** the Bourdon tube (1, 40) is manufactured in the nominal sizes 40, 63, 100, and 160.

11. Method according to any one of claims 1 to 10,
**characterized in**
**that** the Bourdon tube (1, 40) has no impurity inside the interior nor any crevice corrosion after manufacture.

12. Method according to any one of claims 1 to 11,
**characterized in**
**that** the Bourdon tube (1, 40) is stamped with identification data after its manufacture.

## Revendications

1. Procédé de fabrication d'un ressort de Bourdon (1, 40) avec ou sans support de processus (2, 41), présentant au moins les étapes de travail suivantes :
- utilisation d'un tube profilé droit (10, 42) de section transversale approximativement rectangulaire,
- obturation d'une extrémité du tube profilé (10, 42) par une pièce d'extrémité soudée,
- soudage de la deuxième extrémité du tube profilé (10, 42) à un support de processus (2, 41) ou logement de la deuxième extrémité du tube profilé (10, 42) dans un porte-outil (12),
- cintrage du tube profilé (10, 42) sur un mandrin (18, 46) pour former un ressort de Bourdon (1, 40),
**caractérisé par** les étapes de travail suivantes :
- application de deux pièces façonnées (20, 21, 50, 51) sur le contour du ressort de Bourdon précintré (1, 40) et
- mise sous pression du ressort de Bourdon (1, 40) avec une pression de 10 à 100 fois la pression nominale du ressort de Bourdon (1, 40).

2. Procédé selon la revendication 1,
**caractérisé en ce**
**qu'**une pression allant jusqu'à 1000 bars est utilisée lors de la mise sous pression.

3. Procédé selon la revendication 1 ou 2,
**caractérisé en ce**
**que** le ressort de Bourdon cintré (1, 40) est soumis à un traitement thermique postérieur.

4. Procédé selon l'une des revendications 1, 2 ou 3,
**caractérisé en ce**
**que** la liaison entre le tube profilé (10, 42), la pièce d'extrémité et/ou le support de processus (2, 41) est réalisée par soudage au laser sans matériau d'apport de soudage.

5. Procédé selon l'une des revendications 1 à 4,
**caractérisé en ce**
**que** le tube profilé (10, 42) est rempli de cire ou de plomb avant le cintrage.

6. Procédé selon l'une des revendications 1 à 5,
**caractérisé en ce**
**que** le tube profilé (10, 42) présente des bords arrondis et/ou que le tube profilé (10, 42) est soudé à une rondelle de bride à la première extrémité de tube.

7. Procédé selon l'une des revendications 1 à 6,
**caractérisé en ce**
**que** le tube profilé (10, 42) est constitué d'acier, d'acier inoxydable, d'un alliage spécial ou de laiton.

8. Procédé selon l'une des revendications 1 à 7,
**caractérisé en ce**
**que** le porte-outil (12) reçoit par serrage la première extrémité du tube profilé (10, 42) et assure l'étanchéité de la zone extérieure du tube profilé (10, 42) par au moins un élément d'étanchéité, et/ou que le porte-outil (12) présente un support de bride étanche qui est prévu pour recevoir la rondelle de bride de la première extrémité du tube profilé (10, 42).

9. Procédé selon l'une des revendications 1 à 8,
**caractérisé en ce**
**que** le porte-outil (12) présente une entrée de fluide (16) qui est reliée à l'espace intérieur du tube profilé (10, 42) par un canal de liaison (17) pour la mise sous pression.

10. Procédé selon l'une des revendications 1 à 9,
**caractérisé en ce**
**que** le ressort de Bourdon (1, 40) est fabriqué dans les tailles nominales 40, 63, 100 et 160.

11. Procédé selon l'une des revendications 1 à 10,
**caractérisé en ce**
**que** le ressort de Bourdon (1, 40) ne présente aucune contamination dans l'espace intérieur ni de corrosion par fissuration après la fabrication.

12. Procédé selon l'une des revendications 1 à 11,
**caractérisé en ce**
**que** le ressort de Bourdon (1, 40) est estampillé avec les données caractéristiques après la fabrication.
